Europäisches Patentamt

(19) European Patent Office

Office européen des brevets

(11) Publication number: **0 381 897**
**A1**

## (12) EUROPEAN PATENT APPLICATION

(21) Application number: **89313441.1**

(22) Date of filing: **21.12.89**

(51) Int. Cl.⁵: **C09J 175/04, C09J 5/00,**
**A43D 25/20, A43B 13/32**

(30) Priority: **04.02.89 GB 8902501**

(43) Date of publication of application:
**16.08.90 Bulletin 90/33**

(84) Designated Contracting States:
**DE ES FR GB IT**

(71) Applicant: **BOSTIK LIMITED**
**Ulverscroft Works Ulverscroft Road**
**Leicester LE4 6BW(GB)**
㊽ **DE ES FR GB IT**

Applicant: **SORAM**
**VERWALTUNGSGESELLSCHAFT MBH**
**c/o Westrick & Eckholdt, Taunusanlage 11**
**D-6000 Frankfurt/Main(DE)**
㊽ **DE IT**

Applicant: **BOSTIK FRANCE SA.,**
**12 rue Truillot**
**F-94203 Ivry-sur-Seine(FR)**
㊽ **ES FR**

(72) Inventor: **Albert, Karl-Heinz**
**Goldgrubenstrasse 38**
**D-6370 Oberursel 4(DE)**
Inventor: **von Voithenberg, Hubertus**
**Kaiser-Friedrich-Promenade 76**
**D-6380 Bad Homburg(DE)**

(74) Representative: **Harrison, Gordon Donald et al**
**FORRESTER & BOEHMERT**
**Widenmayerstrasse 4/I**
**D-8000 München 22(DE)**

(54) Hot-melt polyurethane compositions and their use in bonding shoes.

㊼ A reactive, hot-melt polyurethane adhesive comprising 0.5 - 30 wt% of an aliphatic cyclic carbonate and 0.1 - 5.0 wt% of an aromatic carbodiimide for use in bonding shoe soles to shoe uppers. The composition is particularly effective in bonding leathers having a high content of free acids.

## HOT-MELT POLYURETHANE COMPOSITIONS AND THEIR USE IN BONDING SHOES

The present invention relates to reactive hot-melt compositions based on polyurethane prepolymers and including a chain-extending agent and their use in bonding shoe soles to shoe uppers.

In particular, the present invention is concerned especially with attaching soles to shoe uppers made from leathers with high acid content.

Leathers with high acid content are defined as leathers with a content of more than 2% free fatty acids determined in an extract in dichloromethane as described in BS 1974: 1309.

So-called "two-way cementing systems" are well known in the shoe industry in which adhesive is applied to the contact surface of a sole and to the contact surface of a shoe bottom and creating a bond by bringing the contact surfaces of sole and of shoe bottom together under pressure.

The efficiency of such processes may be measured both in the performance of the product (the shoe) and in the demands of time, cost, space, safety etc. of the manufacturing operation. Such considerations are set out in greater detail in European patent application 0 223 562.

Neoprene-based adhesives provided satisfactory results with two-way cementing systems but, being solvent-based, present new problems related to solvent removal, including general environmental disadvantages and undesirable working conditions.

Polyurethane-based adhesives when used initially, although inherently compatible with a wider range of materials, were still solvent-based but with a somewhat reduced levels of solvent-removal difficulties.

In UK patent specification GB 2 137 638 is described and claimed a so-called solvent-free adhesive which is a moisture-curable composition comprising polyurethane prepolymers and its use in bonding a sole to a shoe upper is also claimed.

The method of GB 2 137 638 for bonding a sole to a shoe upper comprised the steps of providing on attaching surfaces of one or both of the sole and shoe upper a layer of adhesive composition, exposing each layer of adhesive composition to air-borne moisture to bring chain extension of the polyurethane, heating the layer or at least one of the layers of the adhesive composition to bring it to tacky adhesive condition, pressing the attaching surfaces of the sole and upper together with the composition between them and bringing about cooling of the composition to form an adhesive bond between the sole and the shoe upper. That is to say, this process required a step of heating at least one layer of adhesive to bring it to tacky adhesive condition (activation) before pressing sole and upper together to form an adhesive bond.

In our copending European patent specification 0 223 562 an improved method is described for bonding a sole to a shoe using a moisture-curable melt adhesive. According to this invention, a polyurethane prepolymer based hot-melt adhesive is applied to the shoe upper. This moisture-curable adhesive has to be cured at temperatures of 70 - 120° C in a substantially enclosed chamber with 10 -70% relative humidity. After this hot-cure step, which may last from 10 seconds to 5 minutes, the shoe uppers and the precemented soles had to be spotted and pressed.

Certain types of leathers from which shoe uppers have been made could not be bonded using any of the above described procedures. The bond strengths immediately after pressing were not sufficient of the standards for bonding soles to uppers prescribed by the Association of European Adhesives Manufacturers. In these cases the adhesive film on, and especially in, the leathers did not cure in a time which was acceptable for the shoe manufacturer who requires fast bonding processes.

The reason for the slow curing has been found to be the high content of free acids in the leathers determined according to BS 1974: 1309.

It is an object of the present invention to provide an improved moisture-curable hot-melt adhesive for bonding a shoe sole to a shoe upper which is effective even when using leather having a high content of fatty acids.

It is also an object of the present invention to provide a method of bonding a shoe sole to a shoe upper using such an improved adhesive.

According to the present invention, a reactive, hot-melt composition based on a polyurethane prepolymer and including a chain-extending agent for bonding a shoe sole to a shoe upper is characterised in that it contains 0.5 -30 wt%, preferably 1.0 - 5.0 wt%, of aliphatic cyclic carbonate and 0.1 - 5.0 wt%, preferably 0.5 - 2.0 wt%, of an aromatic carbodiimide.

It is preferred to use a low molecular diol as a chain-extending agent.

The adhesive composition of the invention may be applied to either the sole and/or shoe upper, the adhesive coating subjected to a modified hot-cure step with air-borne moisture, and the sole and shoe upper pressed together with the adhesive between them, the pressing taking place immediately after the hot-cure step, preferably in less than 90 seconds after leaving the hot-cure.

Surprisingly, it has been found that polyurethane adhesives comprising an aliphatic cyclic carbonate and an aromatic carbodiimide in accordance with the present invention cure considerably faster on and in leathers with high acid content. It is thought that the performance of hitherto-known adhesives used in shoe bonding using high acid leathers for the shoe upper and/or the shoe sole was adversely affected by the presence of acidic tanning residues which interact with the catalysts to inhibit the cure of the polyurethane prepolymer in the hot-cure step.

The sole and/or upper may be subjected to pre-treatment, e.g. by roughing, before the moisture-curable adhesive is applied.

In the case of certain sole materials, such as PVC, thermoplastic rubber or polyurethane, it may be possible to effect the bond without application of the moisture-curable adhesive to the sole, but merely to pretreat the soles e.g. by wiping with solvent or primer solution in the way known for polyurethane adhesive. Preferably the soles are spotted (brought together for bonding) in less than 60 seconds after the uppers leave the hot-cure.

The elimination of the separate activation (heating) step in the method of the present invention gives rise to significant economies in time, labour and energy and often also to reduction in quantity of adhesive used. However, in some circumstances it may be necessary to subject a component (sole or shoe) not coated with moisture-curable adhesive to a brief heat treatment.

In some shoe factories it is the practice to coat soles at least one day before they are used. The coating may be a moisture-curable polyurethane, which can cure slowly in ambient temperature and humidity conditions, and this cure can be initiated by the brief application of heat after application of the polyurethane adhesive composition followed by slow cure in ambient conditions. In order to improve the "wet out" of the adhesive, the stored (and thus cooled) sole may be heated prior to bringing the contact surfaces of sole and shoe upper together.

Alternatively, the sole may be coated with a moisture-curable adhesive and subjected to a hot-cure step with air-borne moisture before being pressed with the coated shoe upper which has been subjected to a similar hot-cure step. The improved curing hot melt is based on a solid crystallizable polyester polyurethane prepolymer (as described in EP 0 223 562). To this composition 0.5 - 30%, preferably 1 - 5%, of a cyclic aliphatic carbonate and 0.1 - 5% preferably 0.5 - 2% of an aromatic carbodiimide are added. A crystallization promotor may optionally be added for faster crystallizing. A low molecular diol as a chain extender may be added for higher bond strengths but this is not essential.

Preferably this moisture-curable adhesive is applied to sole or shoe upper as a thin film of 0.1 - 0.3 mm. Although delays of up to 30 minutes or even one hour can be tolerated, the hot-cure step usually follows immediately after application of the adhesive. The temperature of the hot-cure step must be higher than the crystalline melting point of the adhesive, usually 100 -150°C, preferably 120 - 140°C at leathers with high acid content and 100 - 120°C at leathers with low acid content. The hot-cure is carried out in a substantially enclosed chamber with 10 - 70%, preferably less than 30% relative humidity. However, the humidity used is partially dictated by the nature of the materials used; for example, with many commonly used leathers, a dew-point of 60°C should not be exceeded if water staining is to be avoided. The hot-cure step may last from 1 to 5 minutes, but preferably 2 to 3 minutes.

A fast-curing, hot-melt composition is usually applied to shoe uppers. It may in some cases be advantageous to cool the adhesive somewhat after the hot-cure step but the temperature should not be allowed to drop below the crystalline melting point of the adhesive.

The slow curing hot melt composition which may be applied to soles usually has a long activation time, like the adhesives described in UK specification GB 2 137 638. They will cure in ambient conditions of say 20° ± 5°C and 20 - 70% r.h. within 24 hours. They can be reactivated up to 6 months. As explained above, the cure of the adhesive applied to the sole may be initiated by initial brief subjection to heat, for example by heating to a temperature of about 85°C for 4 to 6 seconds before cure under ambient conditions.

In order that the invention can be better understood, preferred embodiments of the invention will now be described in greater detail by way of example.

## EXAMPLE

(a) Adhesive preparation

A prepolymer was synthesized from a poly (butane diol adipate) of molecular weight of about 3 400 (OH number 33 and acid number 0.4) reacted with 4,4'-diphenyl-methane diisocyanate and chain extended with 1,4 butane diol (molar ratio polyester: diol 4 : 1), molar ratio isocyanate: (polyester + diol) 1,67).

77.8 parts per weight polyester and 0.5 parts 1,4-butane diol were melted at 90°C in a reactor equipped with an efficient stirrer. 0.2 parts tosyl isocyanate, 3.9 parts coumarone indene resin B 1 liquid, 0.8 parts titanium dioxide uncoated (Kronos 1053 R) and 13.3 parts Desmodur 44 MS (RTM - pure 4,4'-diphenyl (RTM) methane diisocyanate) were added to the polyester under stirring.

After stirring of this mixture for 1 hour at 100°C, 0.1 part dibutyltin dilaurate dissolved in 0.3 parts Mesamoll (RTM - phenol and cresol sulphonic acid alkyl ester) plasticizer, 2.3 parts propylene carbonate and 0.8 parts Stabaxol 1 (RTM) (aromatic carbodiimide) were added to this mixture. Stirring was continued for 30 minutes at 100°C. Then the product was degassed by evacuation under reduced pressure at 100°C for 30 minutes and filled into aluminium cartridges or other moisture-proof containers. The aluminium cartridges were sealed until ready for application of the adhesive as a hot melt composition.

(b) bonding method

Roughed sole leather was coated with BOSTIK 7803 (RTM), a slowly curing reactive hot melt according to UK 2 137 638. This adhesive was cured for 1 day at ambient conditions.

Roughed upper leathers were cemented with a thin film of the adhesive prepared as above in accordance with the invention. This adhesive cured within $2\frac{1}{2}$ minutes in a special fast curing device, produced by British United Shoe Machinery Limited of Leicester, England, at 140°C and a dew point of 58°C. Immediately after leaving this rapid curer, sole and upper were spotted and pressed for 15 seconds.

COMPARISON

For comparison, different types of leather were coated with BOSTIK 7802, a fast-curing, reactive hot-melt according to UK 2 137 638. This adhesive was cured in the same device at 120°C, dew point 58°C, for $2\frac{1}{2}$ minutes. Immediately after leaving this curer, the precemented sole and the upper were spotted and pressed for 15 seconds.

The initial bond strength values were determined 15 seconds after leaving the press and the final bond strength determined after 5 days at ambient conditions.

The resulting data are shown in the following Table.

TABLE

| Initial Peel Strength Values (N/cm) | | | |
|---|---|---|---|
| Leather | Acid Content | Bostik 7802 | Adhesive of EXAMPLE |
| FEICA standard | 0.5 | 30 | 35 |
| 2 | 0.4 | 27 | 36 |
| 3 | 0.6 | 25 | 30 |
| 4 | 1.0 | 24 | 28 |
| 5 | 2.0 | 20 | 27 |
| 6 | 2.9 | 8 | 27 |
| 7 | 3.6 | 6 | 26 |
| 8 | 4.0 | 3 | 26 |
| 9 | 4.2 | 1 | 20 |
| The final peel strength values were dependent on the firmness of the leather materials. | | | |

**Claims**

1. A reactive hot-melt composition based on a polyurethane prepolymer and including a chain-extending agent for bonding shoe soles to uppers characterised in that it contains 0.5 wt% - 30 wt% of an aliphatic cyclic carbonate and 0.1 - 5 wt% of an aromatic carbodiimide.

2. A reactive hot-melt composition according to claim 1 containing 1.5 wt% of an aliphatic cyclic carbonate and 0.5 - 2 wt% of an aromatic carbodiimide.

3. A reactive hot-melt according to claim 1 or 2, which also includes a low molecular diol as a chain extender.

4. A method of bonding a sole to a shoe in which a moisture-curable melt adhesive according to any one of claims 1 to 3 is applied to either the sole and/or shoe upper, the adhesive coating is subjected to a hot-cure step with air-borne moisture, and the sole and shoe upper are pressed together with the adhesive between them, and wherein the pressing takes place immediately after the hot-cure step, preferably in less than 90 seconds after leaving the hot cure.

5. A method according to claim 4, wherein the sole and/or shoe upper is subjected to pretreatment before the moisture-curable adhesive is applied.

6. A method according to claim 4 or 5, wherein no adhesive is applied to the sole which instead is merely pretreated by wiping with solvent or primer solution.

7. A method according to any one of claims 4 to 6 wherein pressing takes place less than 60 seconds after leaving the hot-cure.

8. A method according to any one of claims 4, 5 or 6, wherein only the sole/or shoe upper is provided with a coating of moisture-curable adhesive, and the non-coated shoe upper or sole respectively is subjected to a brief heat treatment.

9. A method according to claim 4 or 5 wherein a slow-curing moisture-curable polyurethane is applied to the sole at least one day before using and allowed to cure slowly in ambient temperature and humidity conditions.

10. A method according to claim 9, wherein the cure is initiated by the brief application of heat after application of the polyurethane adhesive composition followed by slow cure in ambient conditions.

11. A method according to claim 9 or 10, wherein the sole is heated prior to bringing in contact with the shoe upper so as to improve the "wet out" of the adhesive prior to bringing the contact surfaces of sole and of shoe upper together.

12. A method of bonding a sole to a shoe in which a moisture-curable melt adhesive according to any one of claims 1 to 3 is applied to either the sole and/or the shoe upper substantially as herein before described with reference to and as illustrated by the Example.

13. A method according to any one of claims 4 to 12 wherein the leather used for the shoe upper and/or the shoe sole has a high acid content.

| | **DOCUMENTS CONSIDERED TO BE RELEVANT** | | EP 89313441.1 |
|---|---|---|---|

| Category | Citation of document with indication, where appropriate, of relevant passages | Relevant to claim | CLASSIFICATION OF THE APPLICATION (Int Cl⁵) |
|---|---|---|---|
| D,Y | <u>GB - A - 2 137 638</u> (BOSTIK LIMITED) * Claims 1,2,4,10,11,16 * | 1,3-6, 8,11 | C 09 J 175/04 C 09 J 5/00 A 43 D 25/20 A 43 B 13/32 |
| D,Y | <u>EP - A2/A3 - 0 223 562</u> (BOSTIK LIMITED) * Claims 1-8; page 4, line 34 - page 5, line 8 * | 1,4-12 | |

| TECHNICAL FIELDS SEARCHED (Int Cl⁵) |
|---|
| C 09 J A 43 D A 43 B |

The present search report has been drawn up for all claims

| Place of search | Date of completion of the search | Examiner |
|---|---|---|
| VIENNA | 27-03-1990 | BÖHM |